**Europäisches Patentamt**

**European Patent Office**

**Office européen des brevets**

(11) Publication number : **0 368 365 B1**

(12) **EUROPEAN PATENT SPECIFICATION**

(45) Date of publication of patent specification :
**30.09.92 Bulletin 92/40**

(51) Int. Cl.⁵ : **B60C 23/00**

(21) Application number : **89123349.6**

(22) Date of filing : **15.05.85**

(54) Central tire inflation system.

(30) Priority : **04.06.84 US 617643**
**04.06.84 US 617645**
**04.06.84 US 617644**

(43) Date of publication of application :
**16.05.90 Bulletin 90/20**

(45) Publication of the grant of the patent :
**30.09.92 Bulletin 92/40**

(84) Designated Contracting States :
**DE FR GB IT SE**

(56) References cited :
**US-A- 4 313 483**
**US-A- 4 418 737**
**US-A- 4 421 151**
**US-A- 4 434 833**

(60) Publication number of the earlier application in
accordance with Art. 76 EPC : **0 164 917**

(73) Proprietor : **EATON CORPORATION**
**Eaton Center**
**Cleveland, Ohio 44114-2584 (US)**

(72) Inventor : **Shultz, Gary Richard**
**24708 Kings Pointe Drive**
**Novi Michigan 48050 (US)**
Inventor : **Braun, Eugene Ralph**
**804 Lloyd**
**Royal Oak Michigan 48073 (US)**

(74) Representative : **Douglas, John Andrew**
**Eaton House Staines Road**
**Hounslow Middlesex TW4 5DX (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This Application is divided from Application 85303405.6.

The present invention relates to central tire inflation systems (CTIS), also known as onboard inflation systems and tire traction systems, wherein the inflation pressure of one or more vehicle tires may be controlled from a remote location (usually the vehicle cab) with the vehicle at rest and/or in motion and utilizing an onboard source of pressurized fluid (usually compressed air from the vehicle air brake compressor and/or a compressed air reservoir).

Description of the Prior Art

Central tire inflation systems, also known as tire traction systems, are well known in the prior art as may be seen by reference to United States Patents Nos. 2,634,782; 2,976,906; 2,989,999; 3,099,309; 3,102,573; 3,276,502; 3,276,503; 4,313,483; 4,418, 737; 4,421,151 and 4,434,833, the disclosures of all of which are hereby incorporated by reference. CTIS allow the operator to remotely manually and/or automatically vary and/or maintain the inflation pressure of one or more of the vehicle tires from the vehicle (usually a truck) air system, usually while the vehicle is in motion as well as when the vehicle is at rest.

It is well known that the traction of vehicles on relatively soft terrain (i.e. on mud, sand or snow) may be greatly improved by decreasing the inflation pressure within the tires. By decreasing the inflation pressure, the tire supporting surface (usually called the "footprint") will increase thereby enlarging the contact area between the tires and the terrain. Additionally, it is often desirable to decrease the tire pressure from the over-the-road or highway inflation pressure to increase riding comfort on rough roads. On the other hand, higher tire pressures decrease rolling resistance and tire carcass temperatures on smooth roads thereby increasing economy and safety. Accordingly, in cross country vehicles it is desirable to change the inflation pressure in the pneumatic tires to fit the terrain and is also desirable that a system be provided for changing the inflation pressure of the tires from an onboard source, while the vehicle is at motion or at rest and that the system be controlled from the vehicles operating cab. This is especially true for military vehicles which usually travel in columns whereby stoppage of the vehicle would delay the entire column.

It has been proposed to use the same air pressure source for the CTIS as that which drives the pneumatic brakes of the vehicle, eg in US-A-4 418 737, which represents the stage of the art. This suggests a valve to give priority to the brake system when dangerously low pressures are sensed therein, or in the tire system. The present invention aims further to protect the integrity of the brake system, at least when the CTIS and tires are reasonably operational. According to this invention there is provided Claim 1, a feature of which can provide a means whereby the compressed air stored in the vehicle tires during over-the-road conditions can be utilized to supplement the vehicle air brake system in emergency conditions wherein the vehicle air brake reservoir is at dangerously low operating pressures, while if desired providing optional means whereby the front and rear driving tires of a 4x4 or 6x6 or 8x8 vehicle could be inflated to different pressures, providing automatic control logic whereby the inflation/deflation time could be minimized without drilling of passages in the axle housing and/or hub assemblies which may tend to weaken same and/or render retrofit of a CTIS to an existing vehicle more difficult and costly.

In Embodiments of the present invention, the central tire inflation system also utilises rotary seals which are located in a well protected inboard location (see United States Patent No. 4,434,833 assigned to the Assignee of this invention), valves and conduits of a relatively rugged proven construction which may be located at a protected location or inside the vehicle tire to protect same, valving means which will automatically isolate a tire having less than a predetermined minimum reference pressure from the remainder of the system, valves and/or conduits which require no venting to atmosphere at the vehicle wheel assembly and which allows all venting of the system at a location on the vehicle chassis above the vehicle fording level, valve operation which will exhaust internal pressure on the rotary seals during steady state operation of the system which together with the, valving and control means of the invention, allow the pressurized fluid stored within the vehicle tires to be utilized by the vehicle air brake system during emergency conditions.

The above is accomplished by providing a central tire inflation system for a vehicle utilizing a valve assembly comprising a control valve and a low tire pressure shutoff valve at each wheel end assembly (usually a single or dual tire) which valve assembly is connected to the central control system by a single pressure line or conduit through a rotary seal assembly and pressurization of which single pressure conduit is effective to open and close communication to the vehicle tire and to cause inflation and/or deflation of said tire to a selected pressure. The valve assembly may be located exteriorly of the tire or may be located interiorly of the tire such as in the bead lock portion thereof. The low tire pressure shutoff valve is effective to automatically isolate the tire associated therewith from the remainder of the central tire inflation system when the inflation pressure thereof is below a predetermined minimum reference value.

The single pressure conduit leading to the rotary seal at the wheel hub assembly is connected to a source of pressurized fluid through a plurality of control valves which are effective to open communication to the tire to measure the existing pressurization thereof, to cause inflation or deflation of the tire as required, to establish or block communication to the tire from the central tire inflation system and to exhaust the single pressure line during steady state conditions of the tire inflation system and to relieve pressure on the rotary seals. Preferably, the control valves, which may be separate or provided in a single valve block, are operated by a control, preferably a microprocessor control, which senses the tire inflation value selected by the operator, senses vehicle velocity and the current pressure condition of the vehicle air brake system and the inflation system reservoir.

Embodiments of the present invention will become apparent from a reading of the following description taken in connection with the attached drawings.

BRIEF DESCRIPTION OF THE DRAWINGS

Figure 1 is a schematic illustration of the pneumatic components of the present invention as utilized to control the inflation of a single tire.

Figure 2 is a sectional view of the control valve schematically illustrated in Figure 1.

Figure 3 is a sectional view of the low tire pressure shutoff valve schematically illustrated in Figure 1.

Figure 4 is a sectional view of the quick release valve schematically illustrated in Figure 1.

Figure 5 is a diagrammatic representation of tire imprints at different tire inflation pressures.

Figure 6 is a schematic illustration of the pneumatic components illustrated in Figure 1 during initial or steady state operating conditions.

Figure 7 is a schematic illustration of the pneumatic components of Figure 1 during the tire pressure measurement mode of operation.

Figure 8 is a schematic illustration of the pneumatic components of Figure 1 in the tire inflation mode of operation.

Figure 9 is a schematic illustration of the pneumatic components of Figure 1 illustrating the low tire pressure inflation prevention mode of operation.

Figure 10 is a schematic illustration of the pneumatic components of Figure 1 during the system shutoff mode of operation.

Figure 11 is a schematic illustration of the pneumatic components of Figure 1 during the tire deflation mode of operation.

Figure 12 is a prospective view of a possible operator control panel.

Figure 13 is a schematic illustration of the central tire inflation system of the present invention as utilized in a 6x6 vehicle.

Figure 14 is a schematic illustration of an alternate embodiment of the present invention.

Figure 15 is a schematic illustration of an alternate vehicle air system.

Figure 16 is a schematic illustration of an alternate embodiment of the system of Figure 13.

Figure 17 is a partial schematic illustration of an alternate embodiment of the present invention.

Figure 18 is graphical illustrations of the inflation/deflation time estimation operation of the system control.

DESCRIPTION OF THE PREFERRED EMBODIMENT

In the following description of the present invention, certain terms will be utilized for purposes of reference only and are not intended to be limiting. The terms "upward", "downward", "rightward" and "leftward" refer to directions in the drawings to which reference is made. The terms "inward", and "outward", respectively, refer to directions towards and away from, respectively, the geometric center of the device described. The terms "inflation" and "deflation", respectively, refer to increased and decreased, respectively, pressurization of a tire or the like. Said terminology will include the words above specifically mentioned, derivatives thereof and words of similar import.

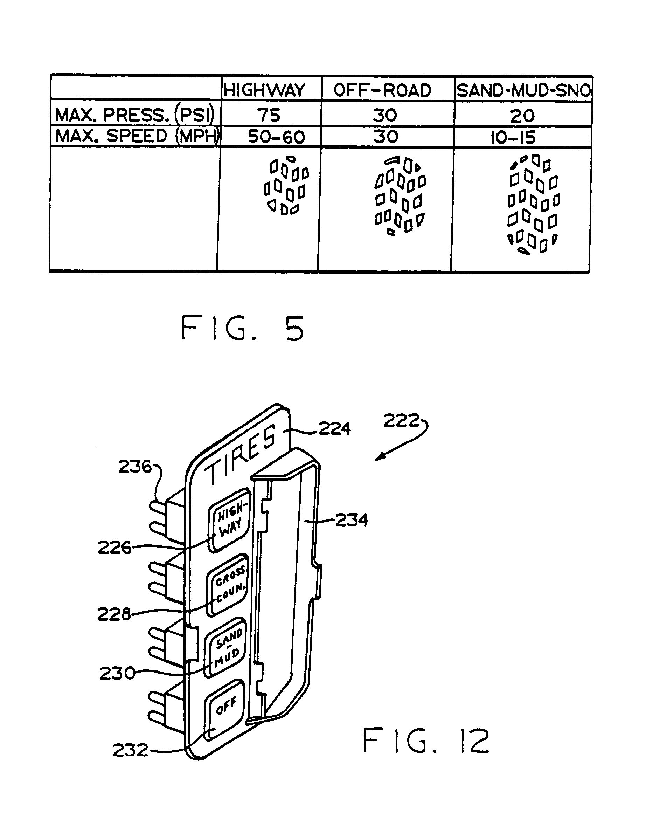

The advantages of varying the inflation pressure of the pneumatic tires (especially the driven tires) of a vehicle, especially a relatively heavy duty vehicle, in accordance with the terrain over which the vehicle is traveling are well known in the prior art and may be appreciated by reference to Figure 5. Assuming, for example, the vehicle rear drive axle tires are normally inflated to about 75 psi (pounds per square inch) for highway operation, decreasing the tire inflation pressure to about 30 psi for cross country travel over rough road or to about 20 psi for operation in sand, mud or snow conditions will result in the tire having a greater contact area, (i.e. footprint), and improved traction. In addition to improved traction at lower tire inflation pressure, the vehicle will be able to maintain a higher speed over poor ground, and reduce wear and tear on the vehicle, because of the smoother ride over "washboard" type terrain. Conversely, to reduce operating temperature and wear and tear on the tires at highway speed, a higher tire inflation pressure is desired. Of course, to increase mobility, it is highly desireable that the tire inflation pressures be controllable from the vehicle cab from an onboard source of pressurized fluid and be variable and maintainable with the vehicle in motion as well as when the vehicle as at rest. It is also highly desireable that the inflation pressure of the vehicle tires be variable and measurable independently of the central tire pressure inflation system for rapid checking and increasing or decreasing of the tire inflation pressure. This is especially desireable for initial inflation of the tires.

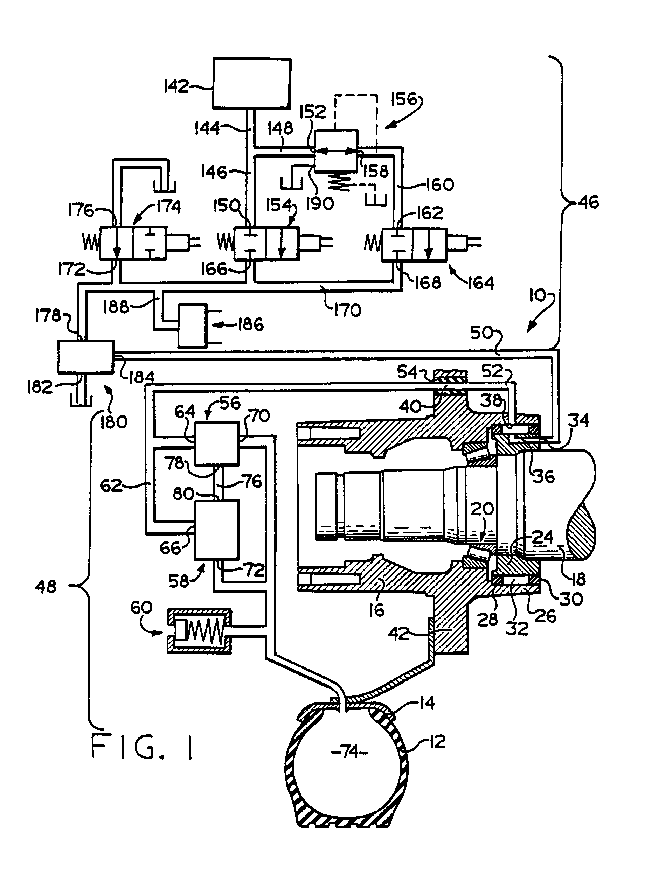

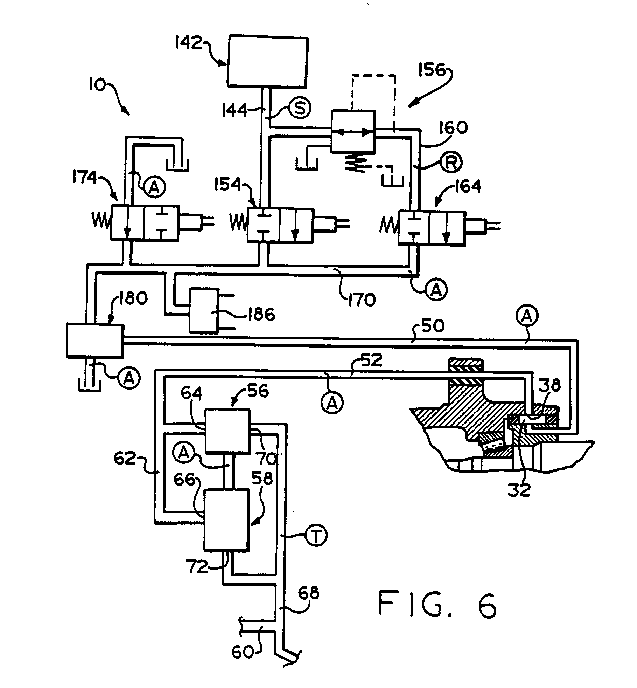

The pneumatic components of the central tire inflation system 10 as utilzed to control the inflation pressure of a single tire 12 may be seen by reference to Figs. 1-4. The state of pressurization of the various conduits and the positions of the various valves illustrated in Figs. 1-4, in the various modes of operation of system 10, may be seen by reference to Figures 6-11.

Inflatable tire 12 is mounted to a tire rim 14 which is fixed to a wheel hub assembly 16 rotationally supported on the outer end of an axle housing 18 by means of bearings 20. An axle shaft (not shown) rotationally driven by conventional means, such as a differential (not shown), extends from the axle housing 18 and typically includes a flange (not shown) for drivingly connecting the axle shaft to the wheel hub. As may be seen in greater detail by reference to United States Patent No. 4,434,833, assigned to the Assignee of this invention, an annular sleeve 24 may be pressed to the axle housing at a location inboard of the bearings 20 and the wheel hub may define and inboardly extending sleeve-type annular flange 26 telescopically surrounding sleeve 24. A pair of rotary seals 28 and 30 extend radially between the outer periphery of sleeve 24 and the inner periphery of sleeve-type flange 26 to define an annular sealed chamber 32 therebetween. Sleeve 24 is provided with an inlet 34 and a passage 36 opening to the chamber 32. Sleeve-type flange 26 is provided with a generally radially extending passage 38 extending from the sealed annular chamber 32 to the exterior outer diameter surface thereof. A single passage 40 may be provided in the radial flange portion 42 of the wheel hub 16 for passage of a pressure conduit. The above construction is described in above mentioned United States Patent No. 4,434,833 and forms no part of the present invention. It is understood, of course, that the present invention is equally applicable to wheel hub/axle housing assemblies (also called "wheel-end assemblies") of other constructions.

The central tire inflation system 10 may be considered to comprise two components, a stationary component 46 fixed to the vehicle chassis and a rotational component 48 rotationally fixed to the wheel hub 16 and tire 12. The stationary component 46 is fluidly connected to the rotational component 48 by means of the annular chamber 32 defined by the rotary seals 28 and 30. Briefly, fluid conduit 50 from the stationary component 46 is fluidly connected to the inlet 34 of passage 36 formed in sleeve 24 while fluid conduit 52 leading to the rotational component 48 is fluidly connected to the passage 38 formed in sleeve-type flange 26 and passes through the opening 40 defined in the flange 42 of the hub 16. To protect conduit 52, a grommet or bushing 54 may be provided in the opening 40 or opening 40 may be defined by a bore in a wheel stud. Of course, alternatively, a passage may be provided in hub 16 opening to the outboard side thereof. It may thus be seen that attachment of system 10 to a wheel end assembly requires no drilling of the axle housing 18 and drilling of only a single hole 40 through radial flange 42 of the wheel hub 16. Accordingly, initial installation and/or retrofit of system 10 to a vehicle is considerably simplified and will not weaken the load supporting structures of the axle housing and wheel hub. It is also noted that the rotary seals 28 and 30 and the conduit 50 leading to the wheel end assembly may be located at an inboard relatively protected location on the vehicle.

Rotating component 48 of system 10 includes a low pressure shutoff valve 56, a control valve 58 and a manual inflate and pressure check valve 60. Low pressure valve 56 and control valve 58 may be formed integrally and/or may be located interiorly of tire 12. The low pressure shut-off valve 56 and control valve 58 may be considered the tire valve assembly of system 10.

A manifold portion 62 of conduit 52 interconnects ports 64 and 66 of valves 56 and 58, respectively, with one another and with the conduit 50 via chamber 32 while a manifold conduit 68 interconnects ports 70 and 72 of valves 56 and 58, respectively, the manual inflate and check valve 60, and with the interior chamber 74 of the inflatable pneumatic tire 12. A conduit 76 interconnects ports 78 and 80 of valves 56 and 58, respectively. If dual tires are utilized, manifold conduit 68 may be split downstream of the valve 60 and manual shut-off valves provided to isolate the tires if required.

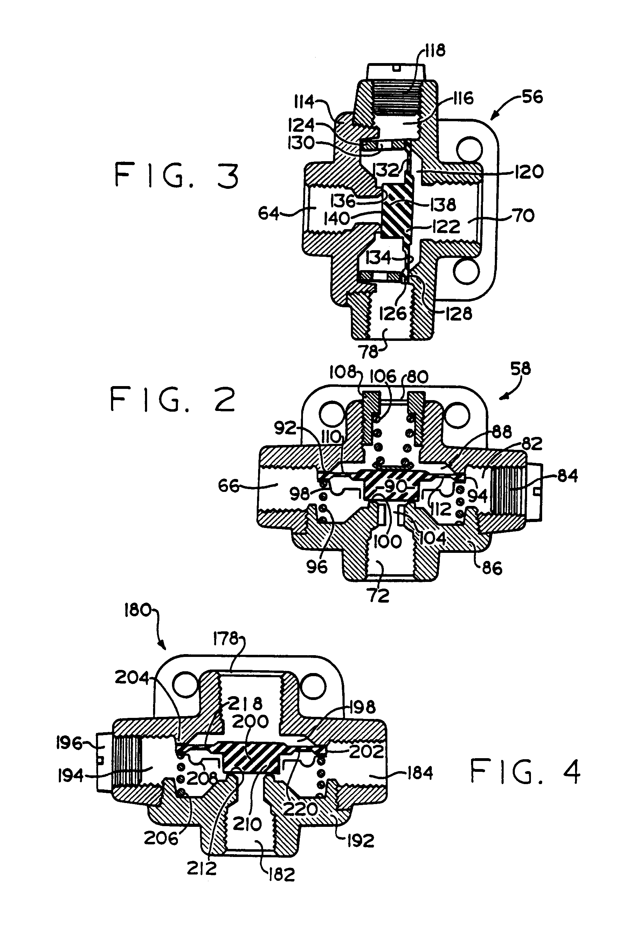

The detailed structure and operation of control valve 58 and low tire pressure shutoff valve 56 may be seen by reference to Figures 2-3, respectively. While the structure of the various valves utilized in the subject invention will be described with a certain degree of detail, it is understood that valves and/or combinations of valves performing the same function, but of a different structure, may be substituted therefor. It is also understood that while the various conduits and passageways are illustrated as a one piece construction, multi-piece construction may be substituted therefor.

As may be seen by reference to Figure 2, control valve 58 is a diaphragm valve which, in an attempt to utilize commercially available, proven components, is a modified truck air brake quick-release valve of the type sold by Berg Manufacturing Company as Part No. AC15793. The valve 58 defines four ports, port 66 connected to manifold portion 62 of conduit 52, port 72 connected to manifold conduit 68, port 80 connected to conduit 76 and an inoperative port 82 sealed by a plug 84. Valve 58 includes a body 86 defining a central chamber 88 in which a plug type diaphragm 90 is received. The valve body 86, which may be a multi-piece structure, defines a first annular valve seat 92 sealed by the outer periphery 94 of the diaphragm 90 for controlling fluid communication between ports 80 and 66. A spring and spring retainer 96 and 98, respectively, urges the outer periphery 94 of diaphragm 90 into sealing engagement with the annular valve seat 92. The valve body 86 also defines an annular valve seat 100 normally engaged by the plug portion 102 of the diaphragm 90 to control fluid communication between ports 66 and 72. A sleeve 104 is received in port 72 to provide a reduced orifice therethrough. A spring 106 and spring seat 108 are provided to bias the plug 102 into sealing engagement with seat 100 as will fluid pressure at port 80 acting on the upper surface 110 of diaphragm 90 which is of greater area than the under surface 112 thereof. The reduced orifice allows the use of a smaller biasing spring 106.

Spring 106 biases plug 102 against valve seat 100 against a pressure in port 72 (connected to the tire 12 via conduit 68) of about 100 psi, thus, limiting maximum tire pressure to 100 psi. Of course, other maximum tire pressures may be selected. Should tire pressure exceed the maximum pressure, plug 102 will move off of seat 100 communicating ports 72 and 66 allowing the excess tire pressure to be relieved in a manner to be described below. Excessive tire pressure can occur due to improper filling through the manual inflate valve 60 and/or as a result of excessive operating temperatures of the tire 12. A pressure of about 10-20 psi at port 66, assuming port 80 is vented, acting on the under surface 112 of diaphragm 90 will lift the plug member 102 off of the seat 100 communicating ports 72 and 66 for establishing fluid communication between the tire and the seal chamber 32. As pressure at port 66 drops to below about 7 psi, spring 106 will again cause plug 102 to sealingly engage seat 100 to close the control valve. Accordingly, at less than about 7 psi pressure in conduits 50 and 52, the control valve 58 will be closed and at pressures above 10-20 psi, the control valve will be open between ports 66 and 72.

The low tire pressure shutoff valve 56 is illustrated in Figure 3 and comprises a modified truck air brake system quick-release valve of the type available from Berg Manufacturing Company as Part No. AC15793, as is the control valve 58 described above. Low pressure shutoff valve 56 includes a valve body 114 defining four ports, port 64 connected to manifold portion 62 of conduit 52, port 70 connected to the interior chamber 74 of tire 12 via manifold conduit 68, port 78 connected to port 80 of valve 58 via conduit 76 and an unused port 116 sealed by plug 118. Valve body 114 also defines an interior chamber 120 in which a plug type diaphragm 122 is received. Valve 56 is modified by removal of the normally present diaphragm spring and replacement thereof by a sleeve member 124 which will rigidly hold the outer periphery 126 of the diaphragm 122 against the valve seat 128. Accordingly, port 70 is positively isolated from ports 64 and 78. Sleeve member 124 is provided with one or more apertures 130 to provide fluid communication between ports 64 and 78 and between port 78 and the under surface 132 of diaphragm 122 which is smaller in area than the upper surface 134 of diaphragm 122. Valve body 114 defines an annular valve seat 136 sealingly engageable by the plug portion 138 of the diaphragm 122 to control fluid communication between ports 64 and 78.

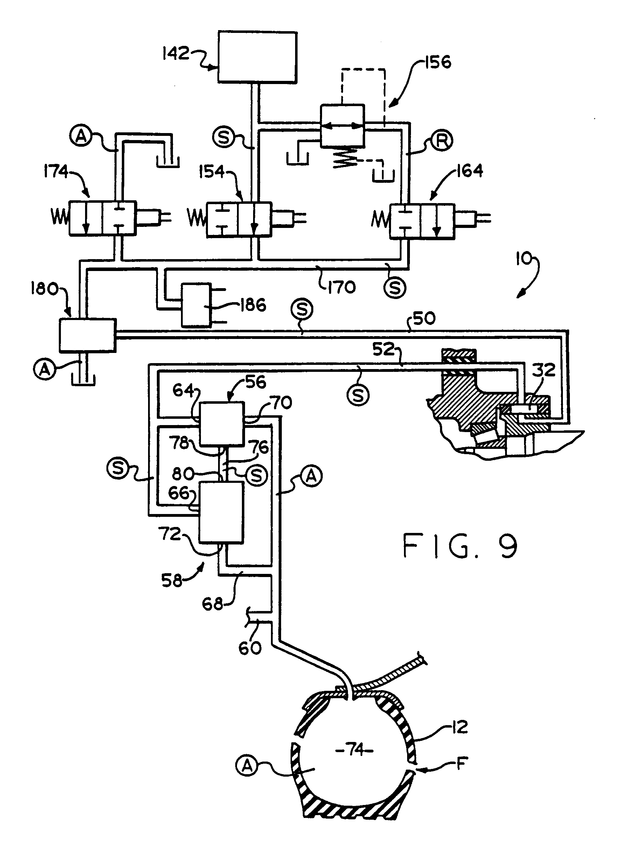

The surface area 134 of diaphragm 122 exposed to tire pressure at port 70 is sized to be at least ten times as large as the surface area 140 of plug portion 138 of diaphragm 122 exposed to supply pressure at port 64. Accordingly, so long as at least a minimum pressure is present in tire chamber 74, even a ten times greater supply pressure in manifold portion 62 communicating with port 64 will not cause valve 56 to open communication between ports 64 and 78. Assuming the supply pressure at port 64 is never to exceed 110 psi, a pressure of greater than 10 psi in the tire and in conduit 68 will maintain valve 56 closed. However, in the event of extensive damage to tire 12 rendering the tire incapable of maintaining at least a minimum pressurization, pressurization of the supply conduit 62 will result in plug 138 moving off of valve seat 136 and fluidly communicating ports 64 and 78 which will cause supply pressure to be applied via conduit 76 to port 80 of the control valve 58, which supply pressure acting on the upper surface 110 of the diaphragm 90 of valve 58 will cause control valve 58 to remain in the closed position blocking communication between port 66 and 72 thus automatically isolating the damage tire. Thus, loss of system supply air through a damaged tire unable to maintain at least a predetermined minimum pressurization will be prevented allowing the remainder of the tire inflation system to inflate the remaining tires in a normal manner. This automatic damaged tire isolation mode of operation is illustrated in Figure 9 and will be described in greater detail below. When the tire inflation system is shut down, pressure on top of the diaphragm 90 acting on surface 110 bleeds off around the outer periphery 94 and valve seat 92. Of course, for the system to operate, an initial tire pressure above the minimum tire pressure, 10 psi for example, must be provided to the tire 12 through the initial inflate and pressure check valve 60.

The initial inflate and pressure check valve 60 is located in manifold conduit 68, or may be located directly in the tire rim, and is located downstream of the valves 56 and 58 for direct fluid communication to the interior chamber 74 of tire 12. Initial inflate and pressure check valve is of a standard tire valve stem construction as is well known in the prior art.

It is important to note that control valve 58 and low tire pressure shutoff valve 56, which are both located at the wheel end assembly, utilize structures wherein venting to atmosphere of the various chambers thereof occurs solely through the manifold portion 62 of conduit 52, as will be described in greater detail below, and thus the valves 56 and 58 will not be subject to clogging due to contamination by water, mud, snow or sand and/or may be located within the tire 12.

The relatively stationary portion 46 of the central tire inflation system 10 is mounted at convenient points on the vehicle chassis, preferably above the fording level of the vehicle, and is fluidly connected to the rotating portion 48 by means of a single conduit 50 and a single rotating seal chamber 32.

The relatively stationary portion 46 includes a source of pressurized fluid 142 which is typically the vehicle air system compressor, or, preferably, a pressurized air reservoir supplied by the compressor. Heavy duty trucks are typically equipped with an air compressor for an onboard compressed air system consisting of air brakes, transmission and/or axle shift actuators and/or controls, air suspensions and the like. If the vehicle is not otherwise provided with an air system, a separate compressor and/or reservoir may be provided for the CTIS 10.

The source of pressurized fluid supplies compressed air, typically at a pressure not exceeding about 120 psi, to a split conduit 144 which defines branches 146 and 148 leading to the inlets 150 and 152, respectively, of inflate valve 154 and pressure regulator 156, respectively. Pressure regulator 156 defines an outlet 158 connected to a conduit 160 leading to the outlet 162 of deflate valve 164. The outlet 166 of inflate valve 154 and inlet 168 and deflate valve 164, respectively, are connected to a manifold conduit 170. Manifold conduit 170 is also connected to the inlet 172 of shutoff valve 174. Shutoff valve 174 has an outlet 176 connected to exhaust. Manifold conduit 170 is also connected to port 178 of quick-release valve 180. A pressure transducer 186 is exposed to the pressure in conduit 170 by means of a branch conduit 188.

Quick-release valve 180 defines a port 182 connected to exhaust and a port 184 connected to the conduit 50 leading to the wheel end assembly.

Pressure regulator 156 may be of any conventional design and will limit pressure flowing therethrough to conduit 160 to a relatively low pressure of about 8-10 psi, and further includes a relief port 190 leading to exhaust. Accordingly, it may be seen that the inlet 150 to the inflation valve 154 is exposed to supply pressure while the outlet 162 of deflate valve 164 is in communication with a regulated pressure of about 8-10 psi. As will be seen, pressure regulator 156 regulates the quick-release valve 180 and thus regulates the minimum pressure to which system 10 will deflate tire 12.

Inflate valve 154, deflate valve 164 and shutoff valve 174 are each relatively small flow two-way valves, preferably solenoid controlled valves, of conventional design. Valves 154, 164 and 174 have a first or closed position blocking fluid flow between the inlet and outlet ports thereof and a second or open position permitting fluid flow between the inlet and outlet ports thereof. Typically, the solenoid two-way valves 154 and 164 are spring biased to the closed positions thereof while valve 174 is spring biased to the open position thereof.

The detailed structure of quick-release or pressure release valve 180 may be seen by reference to Figure 4. Briefly, the structure of quick-release valve 180 is substantially identical to the structure of control valve 58 described above with the exception of not utilizing an exhaust restrictor 104 as is utilized in the valve 58. The valve 180 defines a valve body 192 having four ports, port 178 connected to manifold conduit 170, port 182 connected to exhaust, port 184 connected to conduit 50 and an unused port 194 sealed by a plug 196. The valve body 192 defines a central interior chamber 198 in which a plug type diaphragm 200 is received. The outer periphery 202 of diaphragm 200 cooperates with an annular valve seat 204 to control the flow of fluid between port 178 and 184. A spring 206 and spring retainer 208 are utilized to bias the outer periphery 202 into sealing contact with the valve seat 204. The central plug portion 210 cooperates with an annular valve seat 212 at port 182 to control the flow of fluid between ports 182 and 184. Diaphragm plug portion 210 is biased into sealing engagement with valve seat 212 by means of fluid pressure in conduit 170 acting on upper surface 218.

The operational characteristics of quick-release valve 180 are that a fluid flow (i.e. flow of higher pressurized fluid to a conduit or chamber at a lower pressurization) may be maintained from port 178 to port 184. However, a fluid flow may not be maintained from port 184 to port 178 as diaphragm 200 will lift to open port 184 to the exhaust port 182. Further, the valve 180, by establishing fluid communication from port 178 to port 184 and from port 184 to exhaust 182 will tend to cause the pressurization at port 178 (conduit 170) and the pressurization at port 184 (conduit 50) to equalize at the pressurization of the lower pressurized conduit.

It is important to note that quick-release valve 180, through which the various valves at the wheel end assemblies are vented, is located remote from the wheel end assembly and may also be located remotely from the control valves, solenoid valves 154, 164 and 174. Quick-release valve 180 may be remotely controlled by a single pressure line 170 fluidly connecting port 178 of valve 180 with the solenoid valves via manifold conduit 170. As will be described in greater detail below, for quicker exhausting of the system and/or quicker operation of wheel end valves 56 and 58, a separate quick release valve may be provided at each axle or for each wheel end assembly.

By controlling the pressurization in conduit 170, the minimum pressure to which conduits 50 and 52 and all chambers fluidly connected thereto will automatically be vented through the quick-release valve 180 is also controlled. During the deflation mode of operation of system 10, the quick-release valve will exhaust conduits 50 and 52, which are then connected to the tire chamber 74 through control valve 58, to a pressure equalling the regulated pressure from regulator 156. During system shutdown (steady state operation), tire chamber 74 is isolated from the conduit 52 by control valve 58 and conduit 170 is exhausted to atmosphere through shut-off valve 174 allowing conduits 50 and 52 and the seal chamber 32 to be exhausted to atmosphere through the quick-release valve 180.

The pressure transducer 186 may be of any commercially available design and provides a signal, preferably an electric signal, indicative of the pressure in conduit 170.

The operation of the pneumatic components of central tire inflation system 10 is as follows. Under normal or steady state conditions, i.e. when tire inflation system 10 is not activated, the interior chamber 74 of tire 12, and thus manifold conduit 68, will be pressurized to some pressurization level greater than the minimum pressurization level, such as, for example, 75 psi for highway travel, 30 psi for cross country travel or 20 psi for operation in sand, mud or snow. If the pressurization of tire 12 is below the minimum pressure level (such as 10 psi) the tire must be pressurized to at least a minimum pressurization level by means of the manual inflate and pressurization check valve 60. In the steady state condition (see Figure 6), the inflation valve 154 and the deflate valve 164 are closed and the shutoff valve 174 is open. Under these conditions, supply pressure is present in conduit 144 and regulated pressure is present in conduit 160. As the shutoff valve is open, conduit 170 is vented and thus the upper surface 218 of the diaphragm 200 of quick release valve 180 is exposed to atmospheric pressure only. Whatever pressure may be present in conduits 62, 52 and 50 will be vented to atmosphere as a result of such pressure acting on the lower surface 220 of diaphragm 200 causing the plug 210 to disengage the valve seat 212 connecting conduit 50 to exhaust through ports 184 and 182 of quick-release valve 180. As manifold portion 62 of conduit 52 is vented to atmosphere, there will be only atmospheric pressure present in ports 64 and 66 of valves 56 and 58, respectively and thus ports 70 and 72 of valves 56 and 58, respectively will be sealed to isolate the conduit 68 and the tire 12 at tire inflation pressure from the remainder of the system. As conduits 52 and 50 are vented, or quickly become vented through quick-release valve 180, the rotary seals 28 and 30 defining seal chamber 32 are exposed to atmospheric or substantially atmospheric pressure on both sides thereof.

In Figures 6, 7, 8, 9, 10 and 11 the pressurization of the various conduits and/or chambers is indicated by an "S" for supply pressure, "R" for regulated pressure (8-10 psi), "A" for atmospheric pressure or "T" for tire pressure.

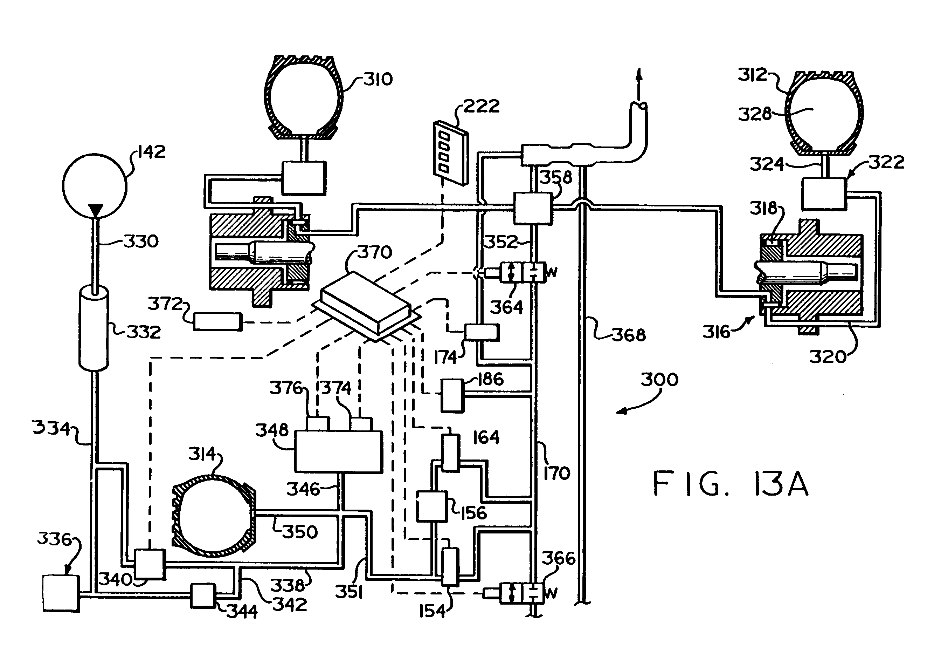

Preferably, the operator is provided with a control panel 222 in the vehicle operating cab which control panel may be seen in greater detail by reference to Figure 12. A typical control panel will include a panel body 224, preferably mountable in the vehicle dashboard, having a multiplicity (here shown as 4) of lightable push buttons 226, 228, 230 and 232. In the embodiment shown, push button 226 is marked "highway", push button 228 is marked "cross country", push button 230 is marked "sand, mud" and push button 232 is marked "off". Of course, additional control buttons may be provided and the operator may be provided with a gauge or LED or LCD readout indicating current tire pressure inflation and/or the operator may be provided with a control whereby a specific inflation pressure may be requested. The panel 222 includes a hinged blackout cover 234 for security purposes. Each of the control buttons includes connector means 236 for connection to a central control unit as will be described in greater detail below.

In one embodiment of control panel 222, a steady light at one of the buttons 226, 228 or 230 will indicate the pressure setting presently being maintained by the system 10. The operator may push another button and its light will blink until the new pressure is obtained at which time that button will glow steadily. If the operator pushes the off button 232, the control will select highway pressure and then deactivate the system and the off button will glow steadily. To provide maintenance of an operator or system selected pressure, the system will periodically monitor the pressure maintained in the various tires and take whatever corrective action (inflate or deflate) that is required to maintain said selected pressure. Insufficient air supply and/or other malfunctions may be indicative by blinking of the off button. As will be described in greater detail below, it is preferred that the control will sense vehicle speed and when the vehicle reaches a predetermined speed, such as 40 miles per hour, automatically inflate the tires to highway pressure and light the highway button 226. As a safety measure, the system will not respond to operator selection of cross country or sand-mud conditions by depression of buttons 228 or 230 above 40 miles per hour sensed vehicle speed.

When the operator selects an inflation pressure different from the current operating pressure, or during automatic periodic monitoring of current operating inflation pressures, the control unit must measure the current inflation pressures to determine if inflation and/or deflation is required to obtain or maintain the selected desired pressure.

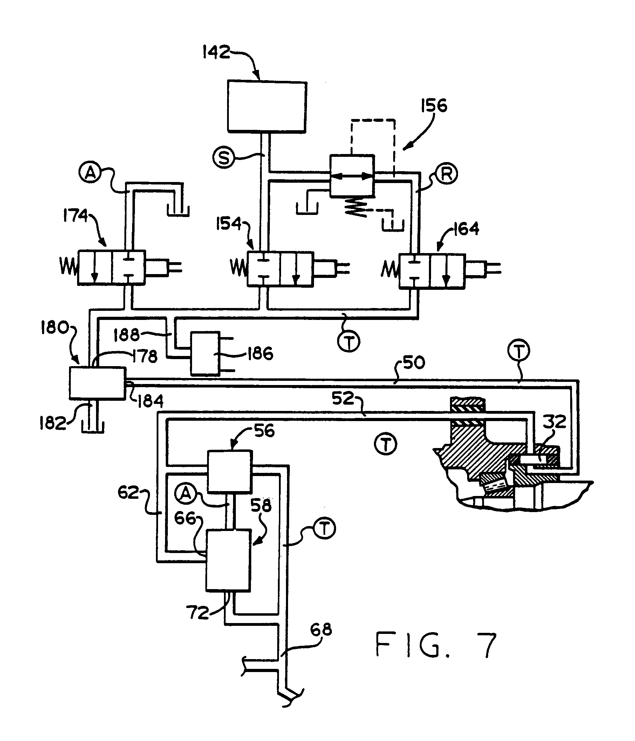

The pressure measurement mode of operation of system 10 is illustrated in Figure 7. Briefly, the controller will close the inflate valve 154, the deflate valve 164 and the shut-off valve 174. The inflate valve 154 will then be quickly pulsed (i.e. quickly opened and then reclosed) which will cause supply air pressure to act upon the upper surface 218 of the diaphragm 200 of the quick release valve 180 thus pressurizing conduits 50, 52 and 62. Assuming the pressure in the tire and in conduit 68 is above the minimum pressure, the low tire pressure shut-off valve 56 will remain closed and the supply pressure at port 66 of the control valve 58 will act on the underside 110 of diaphragm 90 of valve 58 to open fluid communication between ports 66 and 72 of valve 58. Tire pressure in conduit 68 will retain the valve 58 in the open condition, and thus tire pressure or substantially tire pressure will be present in conduits 62, 52 and 50 and, by the action of quick release valve 180, in conduits 170 and 188 leading to pressure transducer 186. Accordingly, pressure transducer 186 will be exposed to the tire pressure and will provide a signal indicative thereof to the control unit. It is understood, that for an accurate measurement of tire inflation pressure the system must be at equilibrium (i.e. with little or no fluid flow) which is the case with control valves 154, 164 and 174 in the closed positions thereof.

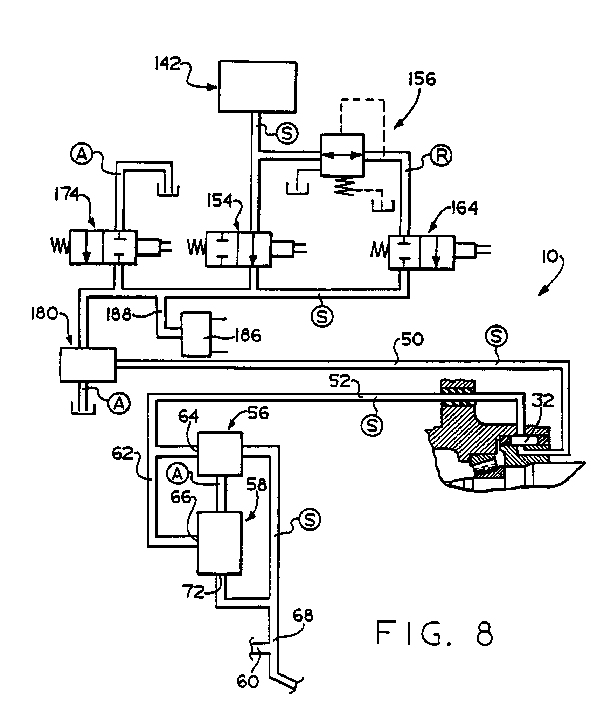

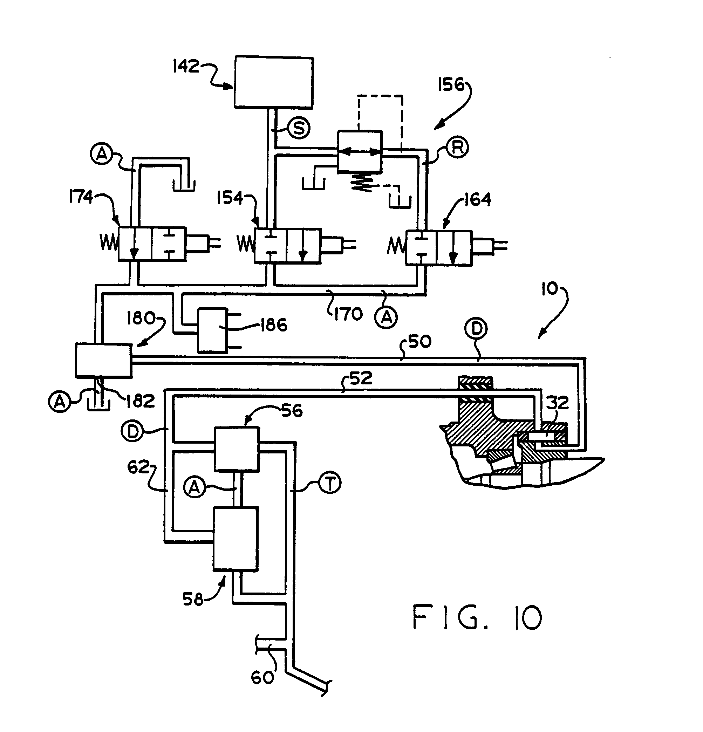

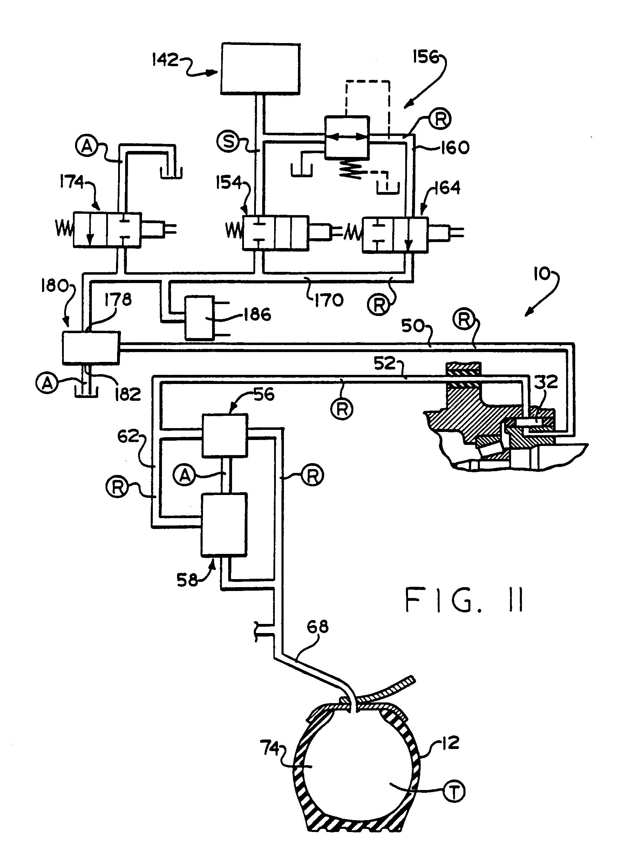

The controller will then compare the present tire inflation pressure indicated by the signal from pressure transducer 186 to the desired tire pressure to determine if inflation or deflation is required. Should the controller determine that inflation is required, it will cause system 10 to assume its inflate mode of operation for a period of time as is illustrated in Figure 8. Should the controller determine that deflation is required, it will cause the system to assume its deflate mode of operation as illustrated in Figure 11. Should the controller determine that no action is required, it will cause the system to assume its system shut-off mode of operation as is illustrated in Figure 10. Each of these modes of operation will be described in greater detail below.

If, based upon a comparison of current monitored tire inflation pressure and operator or controller selected desired pressure, the system control unit determines that inflation of the monitored tires is required, the system 10 will assume the inflation mode of operation illustrated in Figure 8. In the inflate mode of operation, deflate valve 164 and shut-off valve 174 are closed and inflate valve 154 is opened for a period of time. At the end of the period of time the inflate valve 154 is closed and the inflation pressure of the tire, which is present in conduits 60, 62, 52, 50, 170 and 188 is sensed by pressure transducer 186 to determine what, if any, further action is required. Opening of inflate valve 154 with the shut-off valve 174 and deflate valve 164 closed will result in supply pressure in manifold conduit 170 which supply pressure will flow around the exterior periphery of the diaphragm of quick-release valve 180 and into the conduit 50, through the rotary seal chamber 32, into conduit 52 and manifold portion 62 thereof and into ports 64 and 66 of valves 56 and 58, respectively. Assuming the inflation pressure present in conduit 68 is above the minimum inflation pressure, low tire pressure shut-off valve 56 will remain closed and fluid pressure at port 66 of control valve 58 will act upon the undersurface 112 of diaphragm 90 to open port 66 to port 72 for inflation of the tire 12 via conduit 68.

It is noted that a single pressure or exhaust conduit path, conduit 52 is utilized to both open the control valve 58 and to inflate the tire 12, and that inflation occurs at full supply pressure for rapid inflation of tire 12. At the end of the period of time, the inflation valve 154 is closed. As the inflate valve is closed while retaining the shut-off valve and deflate valve in the closed condition, the control valve 58 will remain open and the quick-release valve 180 will allow tire inflation pressure to be monitored by the pressure transducer 186.

Upon obtaining an inflation pressure corresponding to the selected tire pressure (usually plus or minus a given percentage) the tire inflation system 10 will assume the shut-off mode of operation as illustrated in Figure 10. In the shut-off mode of operation, the solenoid inflate valve 154 and deflate valve 164 are closed and the solenoid normally open shut-off valve 174 is open. Accordingly, manifold conduit 170 is exhausted to atmosphere, the pressure in conduits 62, 52 and 50 will rapidly exhaust to atmosphere via exhaust port 182 of the quick-release valve 180 causing the control valve 58 to close and the system 10 will assume the normal steady state condition illustrated in Figure 6. As indicated above, to maintain a desired pressure, it is preferred that while in the steady state mode, the control unit will automatically periodically cycle through the system pressure measurement mode of operation illustrated in Figure 7.

As discussed above, if one of the tires 12 suffers a catastrophic failure preventing the tire from maintaining at least the minimum inflation pressure (such as 10 psi) it is highly desireable to isolate that tire from the remainder of the central tire inflation system 10 so that the remaining tires may be inflated and/or deflated in a normal manner. The operation of the tire inflation system 10 with one of the tires inflated to below the minimum pressure may be seen by reference to Figure 9. As may be seen, tire 12 has suffered a catastrophic failure "F" causing the inner chamber 74 thereof and manifold conduit 68 connected thereto to be essentially vented to atmosphere. Accordingly, chamber 70 of the low pressure shut-off valve 56 will be depressurized and only atmospheric pressure will act upon the upper surface 134 of diaphragm 122. As the inflation valve 154 is open, pressurizing conduit 62 and port 64 of valve 56, port 56 will be in fluid communication with port 78 causing conduit 76 and port 80 of control valve 58 to be pressurized, and thus supply pressure acting on the upper surface 110 of the diaphragm 102 of valve 58 will seal port 72 of the valve 58 from conduit 62 to isolate conduit 68 and tire 12 from the remainder of the inflation system 10.

Should the control unit of system 10 determine by the measurement mode of operation that deflation of the tires is required, the system will assume the deflate mode of operation as seen in Figure 11. In the deflate mode of operation, conduits 50 and 170 are initially at substantially tire pressure, the solenoid inflate valve 154 and the solenoid shut-off valve 174 are closed and the solenoid deflate valve 174 is open. Accordingly, regulated pressure, such as 10 psi, will be present in conduits 160 and 170 and at port 178 of the quick-release valve 180. The deflate valve 164 is open for a period of time. Opening of the deflate valve will maintain the regulated pressure on the top of the diaphragm 200 of the quick-release valve 180 while the conduits 50, 52, 62 and 68 will quickly bleed down toward the regulated pressure as the control valve 58 will remain open following the system pressure measurement mode of operation. As a pressure differential will exist between the interior chamber 74 of tire 12 and the conduit 68, the tire 12 will continue to deflate and air will be exhausted through the quick-release valve port 182. After the period of time, the deflate valve will be closed and system pressure will be measured to determine if further deflation and/or inflation is required. It is important to note that the pressure in conduit 170 and thus in port 178 of the quick-release valve will cause the quick-release valve to close and prevent further venting of the tire 12 below a predetermined regulated pressure which pressure is above the minimum pressure of the tire 12 which will cause opening of the low tire pressure shut-off valve 56.

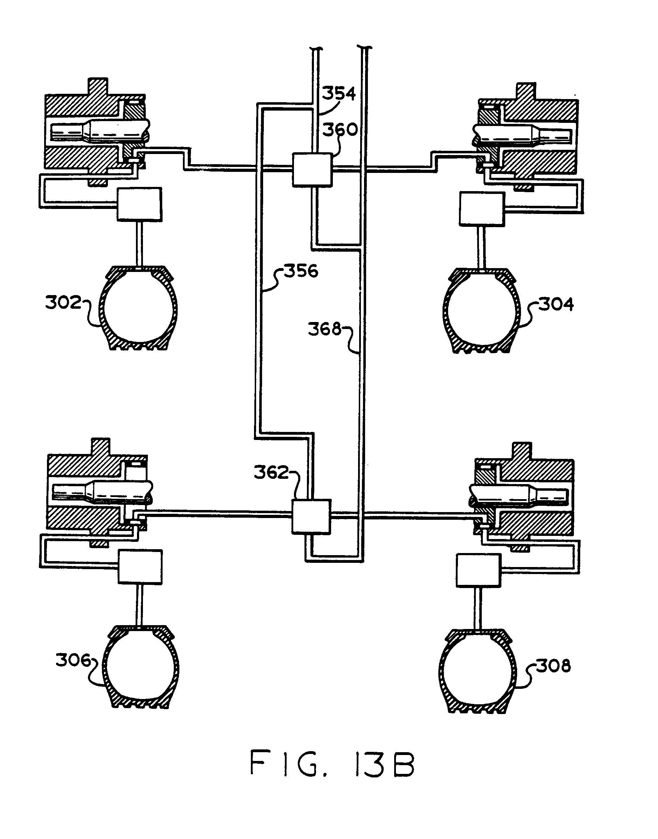

A central tire inflation system 300 for a multi-axle vehicle, such as a 6x6 truck, may be seen by reference to Figure 13. In the description of central tire inflation system 300, elements which are structurally and functionally similar or identical to elements of system 10 described above will be assigned like reference numerals. The central tire inflation system 300 will control the inflation pressure of the four driven rear tires 302, 304, 306 and 308 and of the two driven front tires 310 and 312. Although the rear tires are illustrated as single tires, it is understood, of course, that dual tires may be substituted therefore as is well known in the prior art. The central tire inflation system will also fluidly communicate with the spare tire 314. Tires 310 and 312 are located on opposite ends of a front drive steer axle (not shown) while tires 302 and 304 are located at opposite ends of a front-rear tandem drive axle (not shown) and tires 306 and 308 are located on opposite ends of a rear-rear tandem drive axle (not shown).

Each of the axles includes a wheel-end assembly 316 defining a rotary seal chamber 318 from which a conduit 320 extends to a tire valve assembly 322 comprising valves substantially identical to the low pressure shut-off valve 56 and control valve 58 described above. A conduit 324 in which a manual inflate and pressure measurement valve 326 is received extends from the valve assembly 322 to the interior chamber 328 of the tires. Accordingly, as may be seen, each of the axle ends includes a rotational system component structurally and functionally similar or substantially identical to the rotational component 48 described above in connection with central tire inflation system 10.

The system 300 includes the on-board vehicle air compressor 142 connected by a conduit 330, to the air brake wet tank 332, which tank communicates via conduit 334 with the air brake system 336. Conduit 334 is connected by a conduit 338 to the central tire inflation system 300. Fluid flow through conduit 338 is controlled by a priority valve 340 which will allow fluid flow to the system 300 from the brake supply conduit 334 only if the available pressure in conduit 334 is greater than a preselected reference value, which reference value is above the air brake application pressure. For example, if brake system 336 requires a 60 psi application pressure, priority valve 340 may be set to block communication to conduit 338 if the pressure in conduit 334 does not exceed 65-75 psi. A branch conduit 342 connects conduits 334 and 338, bypassing the priority valve 340, and includes a one-way check valve 344 allowing fluid to flow from the central tire inflation system 300 to the brake system 336 only. A branch conduit 346 connects the conduit 338 to a system reservoir 348 and a branch conduit 350 connects the conduit 338 to the spare tire 314. A further branch conduit 351 connects conduits 338, 346 and 350 to the inflation valve 154 and pressure regulator 156. For improved, quicker operation during the inflation mode of operation it is important to maintain a relatively large pressure differential between the supply pressure and the tire pressure. For this reason, as compressor 142 has a limited capacity, inflation of the tires is normally accomplished from the reservoir 348 and/or the reservoir defined by the spare tire 314 which reservoirs are charged with pressurized fluid from the compressor 142.

A manifold conduit 170 is provided which is fluidly connected to the outlets of inflate valve 154 and deflate valve 164 and to the inlet of shut-off valve 174. Manifold conduit 170 is connected to a first extension conduit 352 extending to the front axle, to a second extension conduit 354 extending to the front-rear axle and to a third extension conduit 356 extending to the rear-rear axle. Extension conduit 352 is connected to a front axle quick release valve 358, extension conduit 354 is connected to a front-rear axle quick release valve 360 and extension conduit 356 is connected to a rear-rear axle quick release valve 362. Quick release valves 358, 360 and 362 may be structurally and functionally identical to quick release valve 180 described above. The flow of fluid between manifold conduit 170 and extension conduit 352 is controlled by a front axle isolation valve 364 while the flow of fluid from manifold conduit 170 to extension conduits 354 and 356 is controlled by rear axle isolation valve 366. Isolation valves 364 and 366 are solenoid controlled normally open two-way valves having a first closed position blocking the flow of fluid therethrough and a second open position permitting the flow of fluid therethrough.

Operation of the central tire inflation system 300 is controlled by a central control unit 370 which is preferably microprocessor based. Of course, other controls of the manual, electric, mechanical and/or pneumatic type may be substituted therefor. Control 370 is electrically connected to the operator control panel 222, isolation valve 364, shut-off valve 174, pressure transducer 186, deflate valve 164, inflate valve 154, isolation valve 366, speed pickup 372, priority valve 340, a low pressure switch 374 on the system reservoir 348 and to an adequate pressure switch 376 on the system reservoir 348 for receiving input signals therefrom and/or generating control signals thereto. A single switch monitoring pressure may replace switches 374 and 376.

As mentioned briefly above, in the inflate mode of operation, it is important to maintain a relatively large pressure differential between the supply pressure and the vehicle tires to assure adequate fluid flow rate inflation of the tires at a rate considerably greater than the leakage rate of the system. Typically, the vehicle compressor 142 is not of sufficient capacity to maintain an adequate supply of pressurized fluid to inflate the tires at a rate desirably greater than the leakage rate of the system. Accordingly, the compressor 142 is utilized to maintain a relatively large reservoir of pressurized fluid in reservoir 348 and/or spare tire 314. During the inflation mode, if the pressure in reservoir 348 and spare tire 314 is adequate for proper inflation of the tires, as indicated by a signal from the adequate pressure switch to the control 370, the control will permit continued system operation in the inflation mode. However, if the pressure in the reservoirs 348 and spare tire 314 is inadequate, a signal from the low pressure switch 374 to the controller 370 will interrupt the inflation mode of operation, i.e. block the outlet from the reservoir, and the compressor 142 will be utilized to recharge the reservoir until adequate pressure is again obtained allowing continuation of the inflation mode of operation.

As has been mentioned briefly above, in those vehicles having front drive-steer axles, such as 4x4, 6x6, 8x8 type vehicles, it is often highly desireable to inflate the front and rear tires to different inflation pressures in view of the weight distribution of the vehicle. The present central tire inflation system 300 provides for this by means of the isolation valves 364 and 366. Briefly, by opening isolation valve 364 and closing isolation valve 366, the inflation pressure of tires 310 and 312 may be monitored or controlled independently of the rear tires. Similarly, by closing of inflation valve 364 and opening of isolation valve 366, the inflation pressure of the rear tires 302, 304, 306 and 308 may be monitored and/or controlled independently of the inflation pressure of the front tires 310 and 312. Preferably, upon operator selection of a desired inflation level, such as highway, cross country or mud/snow, the control 370 will automatically adjust the inflation pressure of the front and rear tires independently.

It is well known that, above a certain vehicle speed, such as for example 40 miles per hour, the tires should be inflated to the highway inflation pressure levels thereof. By way of example, in a 6x6 vehicle with substantially equal load distribution, for over-the-highway conditions a typical desireable inflation pressure of the rear tires would be 75 psi and the desireable inflation pressure of the front tires would be 90 psi. Inflation of the tires to the highway pressurization level thereof is desired to prevent excessive wear and/or temperature build-up which might result in operating same at the cross country (30 psi) or mud-snow (20 psi) pressurization at relatively fast vehicle speeds. Accordingly, system 300 is provided with a means such as speed pickup 372 for monitoring vehicle speed and the control unit 370 is provided with logic rules by which above a certain sensed vehicle speed the tires will automatically be inflated to the highway pressures thereof.

In an alternate embodiment of system 300, see also Figure 13A, 13B, the vehicle tires, 302, 304, 306, 308, 310, 312 and 314 may be utilized, on an emergency basis, to supply air pressure to the vehicle brake system. In a typical vehicle air brake system for a heavy duty truck, the air brake system, including wet tank 332, will have a capacity of about three cubic feet while each of the tires have a capacity of about eight cubic feet. Accordingly, the vehicle tires (including the spare 314) may be considered as having a capacity of at least ten times the capacity of the air brake system. As may be seen by reference to Figure 13, spare tire 314 and reservoir 348 are connected directly to the air brake system 336 by means of conduits 338 and 342, which conduits are controlled by priority valve 340 and check valve 344, respectively. Priority valve 340 will prevent the flow of fluid from conduit 334 to the spare tire, reservoir or the remainder of the central tire inflation system at any time that the pressure in conduit 334 and wet tank 332 is less than a preset value, which preset value is selected to be about 5-15 psi greater than the spring brake application pressure. For example, if spring brake application pressure is 60 psi, the priority valve 340 will close at any time that pressure in tank 332 and conduit 334 falls below 65-75 psi. Check valve 344 is a one way valve allowing pressurized fluid in the spare tire 314 and the reservoir 348 to flow through conduit 338 to the brake system 336. Accordingly, without further action by the control unit 370, the spare tire 314 and the reservoir 348 will act as emergency reservoirs for the brake system 336.

Alternate embodiment 400 is similar to system 300 with the exception of a by-pass conduit 402, controlled by a three-way two position by-pass valve 404, which extends from one or more of the extension conduits, 352, 354 and/or 356, directly to the conduits 50 fluidly connected to wheel end assemblies 316 by-passing the quick-release valves 358, 360 and/or 362. Valves 404 are preferably solenoid controlled valves operated by controller 370 and are biased to a first position blocking the flow of fluid through conduit 402 and allowing fluid flow through conduit 50 from port 184 of quick-release valve 358 to wheel end 316. Valve 404 may assume a second position blocking flow between valve 358 and wheel end 316 through conduit 50 and establishing a direct fluid flow through by-pass conduit 402 between wheel end 316 and extension conduit 352.

In the alternate embodiment 400, the control unit 370 will receive an input signal from the priority valve 340 indicating that the priority valve is closed and thus the fluid pressure in conduit 334 and wet tank 332 is at a potentially dangerous level. Of course, wet tank 332 or conduit 334 may be provided with separate means to indicate lower than desired pressurization. At this time, the control unit 370 will measure the system pressure, i.e. the pressure levels of the drive tires to determine if system pressure is greater than the pressure at which priority valve 340 is closed. If the system pressure in the various tires, individually or collectively, is greater than the pressure at which priority valve 340 is closed, controller 370 will cause the inflate valve 154 and one or more of the isolation valves 364 and 366, to be opened and one or more of the by-pass valves 404 to be in the second positions thereof. Opening of the isolation valves and inflate valve will pressurize conduits 352, 354 and/or 356. Opening of the various by-pass valves 404 will cause opening of the control valves associated therewith thereby pressurizing the conduit 350 through conduit 170 and the inflate valve 154 with pressurized fluid from the tires which, due to the pressure differential, will flow through branch conduits 342 and check valve 344 to the brake system 336. As the tires 302, 304, 306, 308, 310 and 312 have approximately ten times the volume of the air brake system, each 1 psi depressurization of the tires should result in an increased pressurization at the air brake wet tank 332 and conduit 334 of about 10 psi, which increased pressurization along with operation of the vehicle compressor 142 should allow the air brake wet tank to be repressurized to a safe level.

By way of example, allowing the pressure in all seven tires, including the spare, to decrease one psi will supply a volume of pressurized air to the air brakes 336 sufficient to raise air brake system pressure approximately 10-20 psi.

Upon repressurization of the wet tank to an acceptable level, the isolation valves, by-pass valves and inflate valve will be closed allowing the system to resume its normal manner of operation.

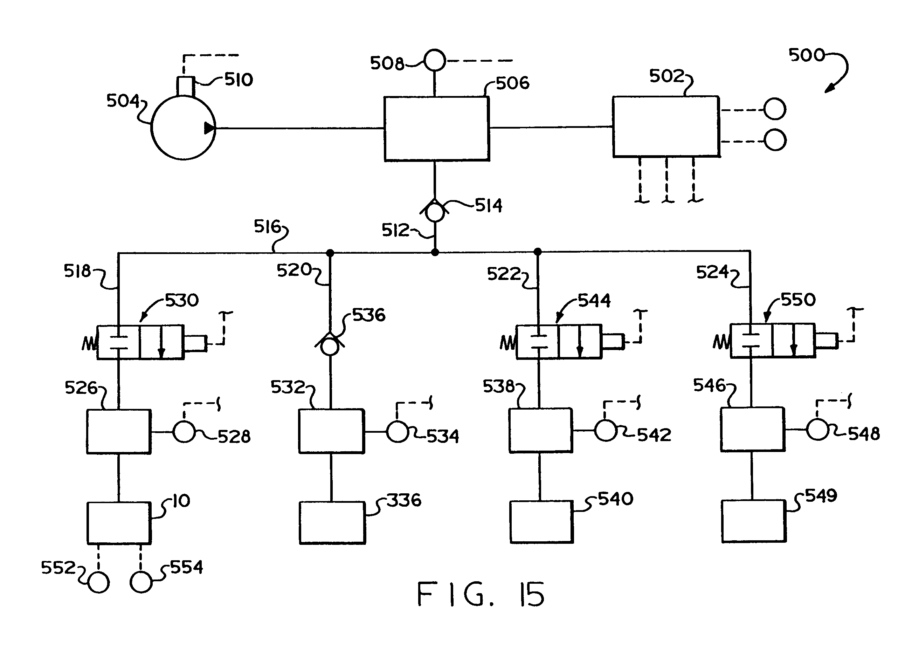

An alternate central tire inflation system and vehicle air management system 500 controlled by a controller 502, preferably a microprocessor base controller, may be seen by reference to Figure 15. Combined system 500 includes a vehicle compressor 504 which supplies a main wet tank or reservoir 506. Wet tank 506 fluidly communicates with a pressure transducer 508 which provides input signals indicative of wet tank 506 pressure to the controller 502. The compressor includes an operator 510 controlled by controller output signals. The main wet tank 506 is fluidly connected to a main output conduit 512 having a one-way check valve 514 therein. Main output conduit 512 includes a manifold portion 516 fluidly communicating with several branch conduits 518, 520, 522 and 524.

Branch conduit 518 fluidly communicates with the central tire inflation system reservoir 526 which supplies the central tire inflation system 10. A pressure transducer 528 supplies input signals to the controller indicative of reservoir 526 pressure and a two-way two-position valve 530 controlled by the controller 502 controls the flow of fluid through conduit 518 from the manifold conduit 516 to the reservoir 526.

Branch conduit 520 fluidly communicates with the air brake reservoir 532 which supplies the vehicle air brakes 336. A pressure switch 534 supplies input signals to the controller indicative of reservoir 532 pressure equalling or exceeding a reference pressure. A one-way check valve 536 controls the flow of fluid through branch conduit 520 from the manifold 516 to the brake system reservoir 532.

Branch conduit 522 fluidly communicates with the vehicle air suspension reservoir 538 which supplies the vehicle air suspension components 540. A pressure switch 542 supplies input signals to the controller 502 indicative of reservoir 538 pressure and a two-way two position valve 544 controlled by the controller 502 controls the flow of fluids through branch conduit 522 from the manifold conduit 516 to the reservoir 538.

Branch conduit 524 fluidly communicates with a miscellaneous system reservoir 546 which supplies miscellaneous vehicle operators 549 such as transmission shifting mechanisms, axle shifting mechanisms and the like. A pressure switch 548 supplies input signals to the controller 502 indicative of reservoir 546 pressure and a two-way two-position valve 550 controlled by the controller 502 controls the flow of fluid through conduit 524 from the manifold conduit 516 to the reservoir 546.

The central tire inflation system 10 includes input signal means 552 and output signal means 554 for receiving and transmitting, respectively, input and output signals, respectively, to the controller 502 for operation of the central tire inflation system in the manner described above. Accordingly, it may be seen that the controller utilized to control the operational functions of the central tire inflation system may also be utilized to control the remainder of the vehicle air system. Two-way two-position valves 530, 544 and 550 are preferably solenoid operated valves having a first closed position blocking flow of fluid through conduits 518, 520 and 524, respectively, and a second open position permitting flow of fluid through conduits 518, 520 and 524, respectively. The valves 530, 544 and 550 are preferably biased to the closed position thereof and are individually operable.

Preferably, the controller 502 is provided with logic rules whereby each of the various pressurized fluid operated systems 336, 10, 540 and 548 are assigned a relative priority and the reservoirs associated therewith, 532, 526, 538 and 546, respectively, are maintained at the desired level of pressurization in accordance to the priority associated therewith. The air brake system 336 and the reservoir 532 associated therewith is assigned the highest priority and will always be pressurized to a pressure level at least equal to the pressure in the other reservoirs 526, 538 or 546 and in the main wet tank 506. A less than desired level of pressurization in reservoir 532, as indicated to the controller by input signals from pressure transducer 534, will result in the controller maintaining the valves 530, 544 and 550 in the closed positions thereof and causing continued operation of the compressor 504.

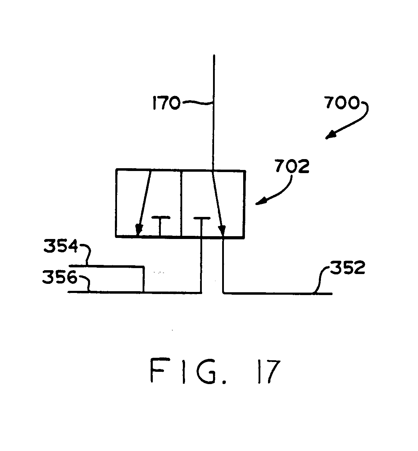

An alternate embodiment 600 of the system 300 discussed above may be seen by reference to Figure 16. As in system 300, manifold conduit 170 branches into branch conduits 354 and 356 to the inlet ports 178 of quick-release valves 360 and 362, respectively. Ports 184 of quick-release valves 360 and 362 are connected to conduits 602 and 604, respectively, leading to the wheel end valves associated with front-rear tires 302 and 304, and rear-rear tires 306 and 308, respectively, which tires are to be at the same level of pressurization. Ports 182 of valves 360 and 362 are connected to an exhaust 368.

Embodiment 600 differs from system 300 in that ports 190 are not plugged but are fluidly interconnected by conduit 606. Accordingly, the surfaces 220 of valves 360 and 362 are at all times exposed to an equal pressure. Of course, the undersurfaces 220 of valves 360 and 362 could be fluidly interconnected in other manners.

In systems 300 and 600, upon pulsing of the inflation valve 154 for a system measurement, the tire control valves 58 will remain open and conduits 602 and 604 will be in fluid communication with the interior chambers 74 of the tires.

In system 300, each of the quick-release valves, 360 and 362 will exhaust conduit 602 or 604, or fluidly connect conduit 354 to conduit 602 or conduit 356 to conduit 604, respectively, to equalize the pressure in conduits 354 and 602 and conduits 356 and 604, respectively. Therefore, conduits 170, 354, 356, 602 and 604 and the interior chambers 74 of tires 302, 304, 306 and 308 will equalize at the pressure of the lowest pressurized tire 302, 304, 306 or 308. This may be undesirable. By fluidly connecting ports 190, the pressurization of the tires and conduits will equalize at the average pressure of tires 302, 304, 306 and 308 and little or no pressurized air will be lost during the measurement mode of operation.

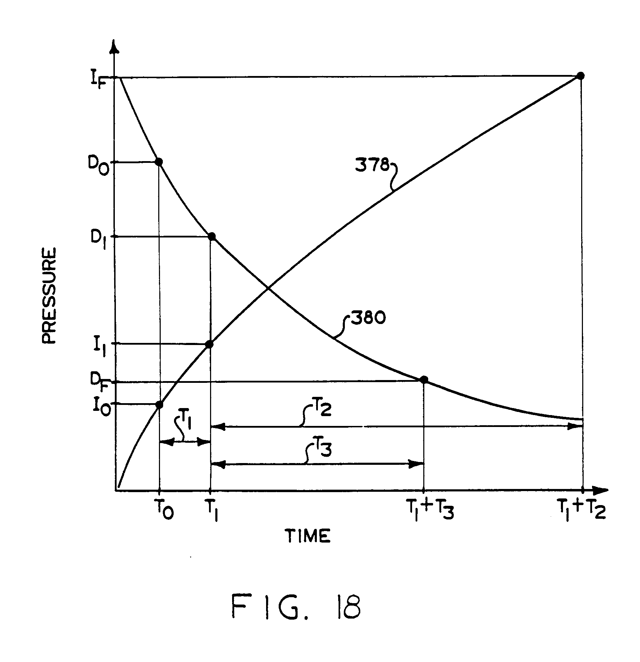

A further alternate embodiment 700 may be seen by reference to Figure 17. Embodiment 700 is substantially identical to system 300 except that isolation valves 364 and 366 are not utilized and a three-way, two-position valve 702, preferably a solenoid valve controlled by controller 370, is interposed the manifold conduit 170 and the front branch conduit 352 and rear branch conduits 354 and 356. Valve 702 has a first position for establishing fluid communication between conduit 170 and 352 and blocking fluid communication between conduit 170 and conduits 354 and 356 and a second position for blocking fluid communication between conduits 170 and 352 and establishing fluid communication between conduit 170 and conduits 354 and 356. As may be seen, valve 402 allows the front and rear axles to be isolated for independent inflation and/or deflation thereof.

As discussed above, the central tire inflation system 300 is normally maintained in the steady state operational mode thereof as seen in Figure 6. However, as a result of operator selection of a different tire inflation pressure or of a different operating terrain, periodic monitoring of inflation pressure and/or determination that the vehicle is operating at at least a predetermined reference vehicle speed, the control 370 will measure the existing tire inflation pressure levels by causing the system to assume pressure measurement mode of operation seen in Figure 7. Based upon this measurement of existing system inflation pressure as measured by the pressure transducer 186, the system will be shut off as seen in Figure 10 to once again assume the steady state operational conditions as seen in Figure 6, or will be caused to assume the inflation or deflation modes of operation as seen in Figures 8 or 11, respectively. In these modes of operation, the inflate valve 154 or the deflate valve 164 is open for a period of time and then the system is caused to assume the pressure measurement mode of operation thereof to determine if further inflation or deflation is required.

Pressure measurement requires a period of time as system pressure can be accurately measured only at relatively steady state conditions. Therefore, it is highly desireable that the period of time during which the inflation or deflation valve is allowed to remain open be selected such that inflate/deflate and then measurement cycles are minimized to the extent possible. To accomplish this, control unit 370 is provided with inflate/deflate mode of operation logic rules whereby the expected rate of system inflation/deflation under the existing conditions (which vary with existing tire and reservoir pressurization, existing operating conditions, availability of pressurized fluid, pressure differentials and the like) may be estimated and thus the period of time during which the inflation or deflation valve is to remain open prior to pressure measurement may also be accurately estimated.

To accomplish the above, after the initial pressure measurement, the inflation or deflation valve is opened for a first period of time then the inflation pressure is again measured. Based upon the measured change in pressure over the initial period of time an estimated rate of change of pressurization curve is generated by the control unit, and, based upon this calculated rate change of pressurization and the magnitude of the change of pressurization required to achieve the desired pressurization, the period of time during which the inflation or deflation valve is to remain open prior to again measuring the existing pressurization is calculated.

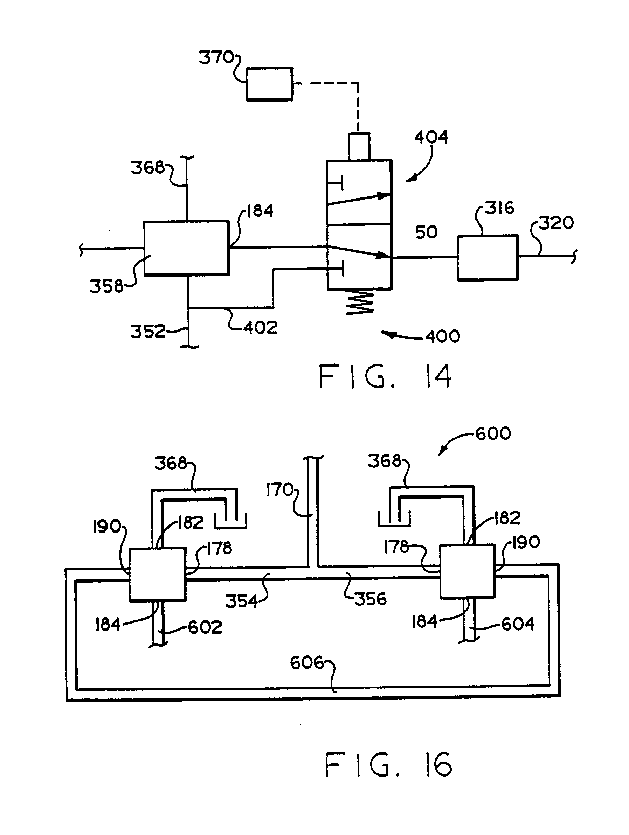

Examples of this control logic operation for the inflation and deflation modes of operation may be seen by reference to Figure 14. For an inflation operation, assuming $I_0$, as measured by the pressure transducer, is the initial pressurization at time $T_0$ and $I_F$ is the selected desired pressurization, the control unit will cause the inflation system 10 to assume the inflation mode of operation condition thereof, as is illustrated in Figure 8, for a first period of time $T_1$. At $T_1$, the control unit will cause the inflation system to assume the pressure measurement mode of operation as illustrated in Figure 7 and the current inflation pressure $I_1$ will then be measured. Based upon the values of $I_0$ and $I_1$, the microprocessor control would generate the shape of an expected inflation curve 378, which curve will be based upon the inputs $I_0$, $I_1$ and certain stored data. Based upon the shape of the expected inflation curve 378, the control will cause the system to assume the inflation mode of operation thereof for an additional period of time $T_2$, at which time ($T_1 + T_2$) the pressure will again be measured to determine if further inflation and/or deflation is required. As may be seen, for a deflation operation, based upon an initial measured pressure value $D_0$ and a measured inflation value $D_1$ after a time period $T_1$ during which the system is in the deflation mode of operation as illustrated in Figure 11, the microprocessor will generate an expected deflation curve 380 and will cause the system to again be in the deflation mode for a period of time $T_3$ at the end of which time ($T_1 + T_3$), the system will again assume the pressure measurement mode of operation to determine if further inflation and/or deflation is required to achieve the desired final pressurization $D_F$.

It is understood, of course, that the shape of the inflation and deflation curves, 378 and 380, respectively, will vary considerably depending upon the initial inflation of the controlled tires, the pressure available in the central tire inflation system reservoirs, the pressure available in the brake system reservoir, the status of other vehicle air operated devices, the condition of the compressor, the number of tires to be inflated and/or deflated, and other like variables. By utilizing the method described above, the frequency and occurences of required pressure measurement, and the time required to place the system in the pressure measurement mode of operation, may be minimized thus minimizing the total time required to inflate or deflate the controlled tires from an initial pressurization to a desired pressurization. Use of the above system will also tend to minimize excessive inflation and/or deflation of the tires during an inflation or deflation operation which might occur if the system were allowed to remain in the inflation or deflation mode of operation for a period of time not based upon an estimated rate of inflation or deflation related to the current conditions of the central tire inflation system.

## Claims

1.  A central tire inflation system (300,400,500,600, 700) for a vehicle equipped with an onboard compressor (142) and an air brake system (336) having an air brake reservoir (332) supplied by said compressor, said central tire inflation system comprising;

    a first conduit (338) fluidly connected to said air brake reservoir;

    control valve means (154,164) fluidly connected to said first conduit for selectively pressurizing and exhausting a second fluid conduit (170)

    tire valve means (358, 360) fluidly connected to said second conduit (170) and to a third conduit (320) fluidly connected with the interior pressurized chamber of an inflatable tire, said tire valve means automatically responsive to fluid pressure in said second and third conduit to establish and block fluid flow between said second and third conduit;

    means (370,374,376) to sense the inflation pressure in said tire;

    means (340) to sense the inflation pressure in said air brake reservoir; and

    means (154,364,366) to fluidly connect said first and third fluid conduits if said fluid pressure in said air brake reservoir is less than a predetermined minimum air brake reference pressure value and the fluid pressure in said tire chamber (328) is greater than a second reference pressure value.

2. The central tire inflation system of claim 1, characterized in that said first conduit (338) comprises a first and a second parallel branch (342), and additionally comprising a priority valve (340) controlling the flow of fluid to said first branch and a one-way check valve (344) controlling the flow of fluid through said second branch, said priority valve (340) permitting a flow of fluid from said air brake reservoir to said control valve means only if the pressure in said air brake reservoir (332) exceeds said predetermined minimum air brake pressure value and said one-way check valve (344) permitting the flow of fluid only from said control valve means (154, 164) to said air brake reservoir.

3. The central tire inflation system of claim 2, wherein said means to sense pressure in said air brake reservoir (332) comprises means (370) to sense the open and closed positions of said priority valve (340).

4. The central tire inflation system of claim 2, additionally comprising a central tire inflation system reservoir fluidly interposed said first and second branches and said control means.

5. The central inflation system of claim 1, for a vehicle having at least one first inflatable tire (312) and at least one second inflatable tire (302), said first tire, under at least one set of selectable conditions, having a desired inflation pressure different from the desired inflation pressure of said second tire, said system additionally comprising a control (222) for selecting a desired level of tire inflation pressurization, and first and second fluid conduit (352, 354) means fluidly connecting said first and second tires, respectively, to said system control valve means, said system control valve means (164,154) responsive to signals from said control to fluidly communicate both of said conduit means with said source (142), isolation valve means (364, 366) interposed in at least one of said first and second conduit means between said system control valve means and said tires, said isolation valve means having a first position establishing fluid communication between said system control valve means and said tire associated with said one of said conduit means and a second position blocking communication between said system control valve means and said tire associated with said one of said conduit means, whereby said first and second tire may be fluidly isolated from one another for independent pressurization thereof.

6. The central tire inflation system of claim 5, wherein said isolation valve means (352, 354) comprises a two-way, two-position valve.

7. The central tire inflation system of claim 6, wherein said two-way, two-position valve is a solenoid controlled valve.

8. The central tire inflation system of claim 9, wherein said isolation valve means comrpises a first isolation valve (364) interposed in said first fluid conduit means (352) and a second isolation valve (366) interposed in said second fluid conduit means (354).

9. The central tire inflation system of claim 6, wherein said isolation valve means comprises a three-way-two-position valve (402), said valve having a first position for establishing fluid communication between said system control valve means and said first conduit means and blocking fluid communication between said system control valve means and said second conduit means, said valve having a second position for establishing fluid communication between said system cokntrol valve means and said first conduit means.

10. The central tire inflation system of claim 9, wherein said isolation valve is a solenoid controllved valve.

11. The central tire inflation system of claims 5 or 7, additionally comprising a first (358) and a second (360) quick release valve interposed in said first (352) and second fluid conduit means (354), respectively, between said tires and said isolation valve means (364,366), said quick-release valve having a first port fluidly communicating with said control valve means (154,164), a second port fluidly communicating with said tire (312,302) and a third port fluidly communicating (368) to an exhaust, said quick-release valve establishing fluid communication between said first and second ports thereof when said first port is at a higher pressurization than said second port and establishing fluid communication between said second port and said third port when said second port is at a higher pressurization than said first port whereby the pressurization in said first and second ports thereof will tend to equalize at a pressurization equal to the lower of the pressure level in the first and second ports.

12. The tire inflation system of claim 11, wherein said vehicle comprises a front axle associated with said first tires and a rear axle associated with said second tires, said first tires under at least one set of operating vehicle conditions having a greater desired inflation pressurization than the desired inflation pressurization of said second tire, said system effective when increased pressurization of all of said tires is required to cause said first and second isolation valve means to be in the first positions thereof until all of said tires are pressurized to the desired inflation pressure of said second tires and to then cause said second isolation valve means to assume the second positon thereof while retaining said first isolation valve means in the first position thereof for continued increased inflation of said first tires.

**Patentansprüche**

1. Zentrales Reifenaufblassystem (300,400,500, 600,700) für ein mit einem an Bord befindlichen Kompressor (142) und einem Luftbremssystem (336) ausgerüsteten Fahrzeug mit einem Luftbremsreservoir (332) versorgt durch den Kompressor, wobei folgendes vorgesehen ist:
eine erste Leitung (338) strömungsmittelmäßig verbunden mit dem Luftbremsreservoir;
Steuerventilmittel (154,164) strömungsmittelmäßig verbunden der ersten Leitung zum selektiven Unterdrucksetzen und Belüften einer zweiten Strömungsmittelleitung (170);
Reifenventilmittel (358,360) strömungsmittelmäßig verbunden mit der zweiten Leitung (170) und mit einer dritten Leitung (320) strömungsmittelmäßig verbunden mit dem inneren einer unter Druck stehenden Kammer eines aufblasbaren Reifens, wobei die Reifenventilmittel automatisch auf den Strömungsmitteldruck in der zweiten und dritten Leitung ansprechen, um Strömungsmittelfluß zwischen der zweiten und dritten Leitung vorzusehen und zu blokieren;
Mittel (370,374,376) zum Abfühlen des Aufblasdrucks in dem Reifen;
Mittel (340) zum Abfühlendes Aufblasdrucks in dem Luftbremsreservoir; und
Mittel (154,364,366) zur strömungsmittelmäßigen Verbindung der ersten und dritten Strömungsmittelleitungen dadurch gekennzeichnet, daß diese Mittel wirksam gesteuert werden, wenn der Strömungsmitteldruck in dem Luftbremsreservoir kleiner ist als ein vorbestimmter minimaler Luftbremsbezugsdruckwert und wenn der Strömungsmitteldruck in der Reifenkammer (328) größer ist als ein zweiter Bezugsdruckwert.

2. Zentrales Reifenaufblassystem nach Anspruch 1 dadurch gekennzeichnet, daß die erste Leitung (338) ein ersten und ein zweiten parallelen Zweig (342) aufweist und zusätzlich das bekannte Prioritätsventil (340) aufweist zur Steuerung des Strömungsmittelflusses zu dem ersten Zweig und mit einem Einweg-Rückschlagventil (344) zur Steuerung des Strömuungsmittelflusses durch den zweiten Zweig, wobei das Prioritätsventil (340) einen Strömungsmittelfluß von dem Luftbremsreservoir (332) zu den Steuerventilmittel nur dann gestattet, wenn der Druck in dem Luftbremsreservoir den vorbestimmten minimalen Luftbremsdruckwert übersteigt und das Einweg-Rückschlagventil (344) gestattet, daß der Strömungsmittelfluß nur von den Steuerventilmittel (154,164) zu dem Luftbremsreservoir erfolgt.

3. Zentrales Reifenaufblassystem nach Anspruch 2 wobei die Mittel zum Abfühlen des Drucks in dem Luftdruckreservoir (332) Mittel (370) aufweisen zum Abfühlen der offenen und geschlossenen Positionen des Prioritätsventils (340).

4. Zentrales Reifenaufblassystem nach Anspruch 2 wobei zusätzlich ein zentrales Reifenaufblassystemreservoir vorgesehen ist und zwar strömungsmittelmäßig angeordnet zwischen den ersten und zweiten Zweigen und den Steuermitteln.

5. Zentrales Aufblassystem nach Anspruch 1 für ein Fahrzeug mit mindestens einem ersten aufblasbaren Reifen (312) und mindestens einem zweiten aufblasbaren Reifen (302) wobei der erste Reifen unter mindestens einem Satz von ausführbaren Bedingungen einen gewünschten Aufblasdruck besitzt unterschiedlich von dem gewünschten Aufblasdruck des zweiten Reifens, wobei das System zusätzlich eine Steuerung (222) aufweist zum Auswählen eines gewünschten Niveaus der Reifenaufblasunterdrucksetzung, und wobei ferner die ersten und zweiten Strömungsmittelleitungen (352,354) die strömungsmittelmäßige Verbindung der ersten bzw zweiten Reifen mit den Systemsteuerventilmitteln vorsehen, wobei die Systemsteuerventilmittel (164,154) auf Signale von der Steuerung ansprechen um die beiden erwähnten Leitungsmittel strömungsmittelmäßig zu verbinden mit der Quelle (142), wobei Trennventilmittel (364,366) angeordnet sind in mindestens einem der ersten und zweiten Strömungsleitungsmittel zwischen den Systemsteuerventilmitteln und den Reifen, wobei die Trennventilmittel eine erste Position und eine zweite Position aufweisen, wobei in der ersten Position eine Strömungsmittelverbindung zwischen den Systemsteuerventilmitteln und dem Reifen assoziiert mit einem der Leitungsmittel vorgesehen ist, während in der zweiten Position die Verbindung zwischen den Systemsteuerventilmitteln und dem Reifen vorgesehen wird, der assoziiert ist mit dem einem der Leitungsmittel, wodurch die ersten und zweiten Reifen strömungsmittelmäßig voneinander getrennt werden können für die unabhängige Unterdrucksetzung derselben.

6. Zentrales Reifenaufblassystem nach Anspruch 5 wobei die Trennventilmittel (352,354) ein Zwei-Wege-Zweistellungsventil aufweisen.

7. Zentrales Reifenaufblassystem nach Anspruch 6 wobei das Zwei-Wege-Zweistellungsventil ein Elektromagnet gesteuertes Ventil ist.

8. Zentrales Reifenaufblassystem nach Anspruch 9 wobei die Trennventilmittel ein erstes Trennventil (364) und ein zweites Trennventil (366) aufweisen, wobei das erste Trennventil (364) in den ersten Strömungsmitteln Leitungsmitteln (352) angeordnet ist während, daß zweite Trennventil (366) in den zweiten Strömungmittel Leitungsmitteln (354) angeordnet ist.

9. Zentrales Reifenaufblassystem nach Anspruch 6, wobei die Trennventilmittel ein Dreiwege-Zweipositionsventil (402) aufweisen, wobei das Ventil eine erste Position besitzt zum vorsehen einer Strömungsmittelverbindung zwischen dem Systemsteuerventilmittel und den ersten Leitungsmitteln, und zum blockieren der strömungsmäßigen Verbindung zwischen den Systemsteuerventilmitteln und den zweiten Leitungsmitteln, wobei das Ventil eine zweite Position besitzt zum Vorsehen einer Strömungsmittelverbindung zwischen den Systemsteuerventilmitteln und den ersten Leitungsmitteln.

10. Zentrales Reifenaufblassystem nach Anspruch 9 ,wobei das Trennventil ein elektromagnet gesteuertes Ventil ist.

11. Zentrales Reifenaufblassystem nach Anspruch 5 oder 7, wobei zusätzlich ein erstes (358) und ein zweites (360) Schnellfreigabeventil angeordnet ist in den ersten (352) bzw zweiten Strömungsmittel-Leitungsmitteln (354), und zwar zwischen den Reifen und dem erwähnten Trennventilmitteln (364,366), wobei das Schnellfreigabeventil erste, zweite und dritte Anschlüsse aufweist, wobei der erste Anschluß strömungsmittelmäßig in Verbindung steht mit den Steuerventilmitteln (154,164), der zweite Anschluß strömungsmittelmäßig in Verbindung steht mit dem Reifen (312,302) und der dritte Anschluß strömungsmittelmäßig in Verbindung steht (368) mit einem Auslaß, wobei ferner das Schnellfreigabeventil eine Strömungsmittelverbindung vorsieht zwischen den ersten und zweiten Anschlüssen dann, wenn der erste Anschluß auf einer höheren Unterdrucksetzung liegt als der zweite Anschluß, wobei eine Strömungsmittelverbindung vorgesehen wird zwischen den zweiten Anschluß und dem dritten Anschluß dann, wenn der zweite Anschluß sich auf einer höheren Unterdrucksetzung befindet als der erste Anschluß, wodurch die Unterdrucksetzung der ersten und zweiten Anschlüsse die Tendenz hat sich auszugleichen bei einer Unterdrucksetzung die gleich ist dem niedrigeren Druckniveau der ersten und zweiten Anschlüsse.

12. Zentrales Reifenaufblassystem nach Anspruch 11, wobei das Fahrzeug eine mit den ersten Reifen assoziierte Vorderachse und eine mit den zweiten Reifen assoziierte Hinterachse aufweist, wobei die ersten Reifen dabei mindestens einem Satz von Fahrzeugbetriebsbedingungen eine größere gewünschte Aufblasunterdrucksetzung besitzen als die gewünschte Aufblasunterdrucksetzung des zweiten Reifens, wobei das System dann effektiv ist, wenn die erhöhte Unterdrucksetzung sämtlicher erwähnter Reifen erforderlich ist, um zu bewirken, daß die ersten und zweiten Trennventilmittel in den ersten Positionen sich befinden bis sämtliche Reifen auf den gewünschten (oder Soll-) Aufblasdruck der zweiten Reifen unter Druck gesetzt sind, um sodann zu bewirken, daß die zweiten Trennventilmittel ihre zweite Position einnehmen, während die ersten Trennventilmittel in der ersten Position gehalten werden und zwar für das fortgesetzte erhöhte Aufblasen der ersten Reifen.

## Revendications

1. Un système de gonflage centralisé de pneumatiques (300, 400, 500, 600, 700) pour un véhicule équipé d'un compresseur (142) installé à bord et d'un système de freinage pneumatique (336) comportant un réservoir d'air de freinage (332) alimenté par ledit compresseur, ledit système de gonflage centralisé de pneumatiques comprenant :
   – un premier conduit (338) relié fluidiquement audit réservoir d'air de freinage ;
   – des moyens formant soupape de commande (154, 164) reliés fluidiquement audit premier conduit pour assurer sélectivement une pressurisation et une décharge d'un second conduit de fluide (170);
   – des moyens formant soupapes de pneumatiques (358, 360) reliés fluidiquement audit second conduit (170) et à un troisième conduit (320) en communication fluidique avec la chambre pressurisée d'un pneumatique gonflable, lesdits moyens formant soupapes de pneumatiques répondant automatiquement à une pression fluidique dans lesdits second et troisième conduits pour laisser passer ou arrêter un écoulement de fluide entre les second et troisième conduits ;
– des moyens (370, 374, 376) pour capter la pression de gonflage dans ledit pneumatique ;
– des moyens (340) pour capter la pression de gonflage dans ledit réservoir d'air de freinage ; et
– des moyens (154, 364, 366) pour relier fluidiquement lesdits premier et troisième conduits de fluide,
– système caractérisé en ce que ces moyens sont commandés efficacement si la.dite pression de fluide dans ledit réservoir d'air de freinage est inférieure à une valeur minimale prédéterminée de pression de référence d'air de freinage et si la pression de fluide dans ladite chambre de pneumatique (328) est supérieure à une seconde valeur de pression de référence.

2.  Le système de gonflage centralisé de pneumatiques selon la revendication 1, caractérisé en ce que ledit premier conduit (338) comprend des première et seconde branches parallèles (342), et comprend additionnellement la soupape de priorité connue (340) commandant l'écoulement de fluide dans ladite première branche et une soupape unidirectionnelle d'arrêt (344) commandant l'écoulement de fluide dans ladite seconde branche, ladite soupape de priorité (340) permettant un écoulement de fluide dudit réservoir d'air de freinage (332) vers lesdits moyens formant soupape de commande seulement si la pression dans ledit réservoir d'air de freinage est supérieure à ladite valeur minimale prédéterminée de pression d'air de freinage et ladite soupape unidirectionnelle d'arrêt (344) permettant l'écoulement de fluide seulement desdits moyens formant soupape de commande (154, 164) vers ledit réservoir d'air de freinage.

3.  Le système de gonflage centralisé de pneumatiques selon la revendication 2, dans lequel lesdits moyens de captage de la pression dans ledit réservoir d'air de freinage (332) comprennent des moyens (370) pour capter les positions d'ouverture et de fermeture de ladite soupape de priorité (340).

4.  Le système de gonflage centralisé de pneumatiques selon la revendication 2, comprenant additionnellement un réservoir de système de gonflage centralisé de pneumatiques qui est interposé fluidiquement entre lesdites première et seconde branches et lesdits moyens de commande.

5.  Le système de gonflage centralisé selon la revendication 1, pour un véhicule comportant au moins un premier pneumatique gonflable (312) et au moins un second pneumatique gonflable (302), ledit premier pneumatique ayant, dans au moins une série de conditions sélectionnables, une pression désirée de gonflage qui est différente de la pression désirée de gonflage dudit second pneumatique, ledit système comprenant additionnellement une commande (222) pour sélectionner un niveau désiré de pressurisation de gonflage de pneumatique, et un premier et un second conduits de fluide (352, 354) reliant respectivement fluidiquement lesdits premier et second pneumatiques avec lesdits moyens formant soupape de commande pour le système, lesdits moyens (164, 154) formant soupape de commande pour le système répondant à des signaux provenant de ladite commande pour mettre fluidiquement en communication les deux conduits précités avec ladits source (142), des moyens formant soupapes d'isolement (364, 366) interposés dans au moins un desdits premier et second conduits entre lesdits moyens formant soupapes de commande de système et lesdits pneumatiques, lesdits moyens formant soupapes d'isolement comportant une première position établissant une communication fluidique entre lesdits moyens formant soupapes de commande de système et ledit pneumatique associé à l'un des conduits précités, et une seconde position supprimant la communication entre lesdits moyens formant soupapes de commande de système et ledit pneumatique associé à un des conduits précités, de telle sorte que le premier et le second pneumatiques puissent être isolés fluidiquement l'un de l'autre en vue d'une pressurisation indépendante.

6.  Le système de gonflage centralisé de pneumatiques selon la revendication 5, dans lequel lesdits moyens formant soupapes d'isolement (352, 354) comprennent une soupape à deux voies et deux positions.

7.  Le système de gonflage centralisé de pneumatiques selon la revendication 6, dans lequel ladite soupape à deux voies et deux positions est une soupape commandée par solénoïde.

8.  Le système de gonflage centralisé de pneumatiques selon la revendication 6, dans lequel lesdits moyens formant soupapes d'isolement comprennent une première soupape d'isolement (364) interposée dans ledit premier conduit de fluide (352) et une seconde soupape d'isolement (366) interposée dans ledit second conduit de fluide (354).

9. Le système de gonflage centralisé de pneumatiques selon la revendication 6, dans lequel lesdits moyens formant soupapes d'isolement comprennent une soupape à trois voies et deux positions (402), ladite soupape ayant une première position pour établir une communication fluidique entre lesdits moyens formant soupapes de commande de système et ledit premier conduit et pour couper la communication fluidique entre lesdits moyens formant soupapes de commande de système et ledit second conduit, ladite soupape ayant une seconde position pour établir une communication fluidique entre lesdits moyens formant soupapes de commande de système et ledit premier conduit.

10. Le système de gonflage centralisé de pneumatiques selon la revendication 9, dans lequel ladite soupape d'isolement est une soupape commandée par solénoïde.

11. Le système de gonflage centralisé de pneumatiques selon les revendications 5 ou 7, comprenant additionnellement une première (358) et une seconde (360) soupapes de déclenchement rapide interposées dans ledit premier conduit (352) et ledit second conduit (354) respectivement entre lesdits pneumatiques et lesdits moyens formant soupapes d'isolement (364, 366), lesdites soupapes de déclenchement rapide comportant un premier orifice en communication fluidique avec lesdits moyens formant soupapes de commande (154, 164), un second orifice en communication fluidique avec ledit pneumatique (312, 302) et un troisième orifice en communication fluidique (368) avec un conduit d'échappement, ladite soupape de déclenchement rapide établissant une communication fluidique entre son premier et son second orifices quand ledit premier orifice est soumis à une pressurisation plus grande que le second orifice et établissant une communication fluidique entre ledit second orifice et ledit troisième orifice quand ledit second orifice est soumis est soumis à une pressurisation plus forte que ledit premier orifice, de telle sorte que la pressurisation dans lesdits premier et second orifices aient tendance à prendre une valeur égale à une pressurisation correspondant à plus bas des niveaux de pression régnant dans les premier et second orifices.

12. Le système de gonflage de pneumatiques selon la revendication 11, utilisé dans un véhicule comprenant un essieu avant associé auxdits premiers pneumatiques et un essieu arrière associé auxdits seconds pneumatiques, lesdits premiers pneumatiques ayant, dans au moins une série de conditions de marche du véhicule, une plus grande pressurisation de gonflage désirée que la pressurisation de gonflage désirée pour lesdits seconds pneumatiques, ledit système agissant, lorsqu'une augmentation de pressurisation de tous les pneumatiques précités est nécessaire, pour faire passer lesdites première et seconde soupapes d'isolement dans leurs premières positions jusqu'à ce que tous les pneumatiques soient pressurisés à la pression de gonflage désirée pour lesdits seconds pneumatiques et faisant passer ensuite ladite seconde soupape d'isolement dans sa seconde position tout en maintenant la première soupape d'isolement dans la première position pour poursuivre l'augmentation de gonflage desdits premiers pneumatiques.

FIG. I

FIG. 3

FIG. 2

FIG. 4

EP 0 368 365 B1

| | HIGHWAY | OFF-ROAD | SAND-MUD-SNO |
|---|---|---|---|
| MAX. PRESS. (PSI) | 75 | 30 | 20 |
| MAX. SPEED (MPH) | 50-60 | 30 | 10-15 |
| | | | |

FIG. 5

FIG. 12

21

FIG. 6

FIG. 7

FIG. 8

FIG. 9

FIG. 10

F I G. II

FIG. 13A

EP 0 368 365 B1

FIG. 13B

FIG. 14

FIG. 16

FIG. 15

FIG. 17

FIG. 18